# EUROPÄISCHE PATENTSCHRIFT

(11) **EP 0 913 301 B1**
(45) Veröffentlichungstag und Bekanntmachung des Hinweises auf die Patenterteilung: **01.06.2005**
(21) Anmeldenummer: 98118069.8
(22) Anmeldetag: 24.09.1998
(51) Int. Cl.: B60S 1/52, B05B 1/34

(54) **Düsenanordnung, insbesondere für eine Scheibenwischeranlage an Kraftfahrzeugen**
Nozzle assembly, in particular for a vehicle windscreen wiper device
Arrangement de buses, en particulier pour un système d'essuyage de vitres pour automobiles

(30) Priorität: 29.10.1997 DE 19747782
(43) Veröffentlichungstag der Anmeldung: 06.05.1999
(73) Patentinhaber: ROBERT BOSCH GMBH, 70442 Stuttgart (DE)
(72) Erfinder: Fischer, Ernst, 76593 Gernsbach (DE)

(56) Entgegenhaltungen:
- EP-A- 0 733 527
- FR-A- 2 233 832
- GB-A- 2 121 318

## Beschreibung

Die Erfindung betrifft eine Düsenanordnung, insbesondere für eine Scheibenwischanlage an Kraftfahrzeugen, mit den im Oberbegriff des Anspruchs 1 genannten Merkmalen.

### Stand der Technik

Düsenanordnungen der gattungsgemäßen Art sind bekannt. Diese werden beispielsweise dazu eingesetzt, um eine Scheibenwischanlage eines Kraftfahrzeuges, insbesondere einer Heckscheibe des Kraftfahrzeuges, mit Wasser zur Scheibenreinigung zu versorgen. Hierbei ist ein Düsenkörper vorgesehen, der wenigstens eine, manchmal zwei, Düsen aufweist. Der Düsenkörper wird von einem einseitig geschlossenen Hohlzylinder gebildet, wobei der Innenraum des Hohlzylinders eine Zuführöffnung für das Wasser bildet. Die Düsen sind in dem Mantel des Zylinders angeordnet, wobei deren Düsenöffnungen im wesentlichen senkrecht zur Zuführöffnung verlaufen. Üblicherweise sind die Düsen als verstellbare Düsen, beispielsweise als sogenannte Kugeldüsen, ausgebildet, so daß deren Spritzrichtung veränderbar ist. Die Düsen sind hierbei in der Nähe des Grundes der Zuführöffnung angeordnet. Bei der bekannten Düsenanordnung ist nachteilig, daß es infolge der unter Druck erfolgenden Zuführung von Spritzwasser in der Zuführöffnung zu Wirbelbildungen kommt, die zu einer starken Streuung der aus den Düsen austretenden Spritzstrahlen führt. FR-A-2 233 832 offenbart den Oberbegriff des Anspruchs 1.

### Vorteile der Erfindung

Die erfindungsgemäße Düsenanordnung mit den im Anspruch 1 genannten Merkmalen bietet demgegenüber den Vorteil, daß in einfacher Weise eine Bündelung der aus den Düsen austretenden Spritzstrahlen möglich ist. Dadurch, daß innerhalb der Zuführöffnung wenigstens ein Strömungskörper zur Beeinflussung eines mit Druck der Zuführöffnung zugeführten Mediums angeordnet ist, ist es vorteilhaft möglich, eine Wirbelbildung innerhalb der Zuführöffnung zu vermeiden beziehungsweise diese so zu beeinflussen, daß der aus der wenigstens einen Düse austretende Spritzstrahl eine starke Bündelung aufweist, das heißt, dieser wenig streut. Hierdurch wird ein im wesentlichen zielgenaues Benetzen, insbesondere einer zu wischenden Scheibe, möglich. Ferner ist vorgesehen, daß der Strömungskörper ein mit der Wandung der Zuführöffnung verbundener, in Axialrichtung der Zuführöffnung verlaufender, und insbesondere mit einer axialen Stirnfläche am Grund der Zuführöffnung anliegender Steg ist. Durch Anordnung des Steges hat sich überraschenderweise herausgestellt, daß durch die Zuführöffnung strömendes, am Grund der Zuführöffnung auftreffendes Medium, insbesondere Wasser einer Scheibenwischanlage, an einer Wirbelbildung verhindert wird, so daß das unter Druck stehende Medium im wesentlichen gleichmäßig auf die wenigstens eine Düsenöffnung geführt werden kann und zur Ausbildung des gebündelten, eine geringe Streuung aufweisenden, Spritzstrahles führt. Ferner ist vorgesehen, daß die Düsenanordnung zwei Düsen aufweist, deren Düsenöffnungen zueinander axial beabstandet in der Zuführöffnung münden und die zu einer Radialen der Zuführöffnung jeweils unter einem gleichen jedoch spiegelbildlichen Winkel verlaufen, und zu der Steg unsymmetrisch zu den Düsenöffnungen angeordnet ist. Hierdurch wird vorteilhaft erreicht, daß eine sich auf die zueinander beabstandet angeordneten Düsenöffnungen sich unterschiedlich auswirkende Wirbelbildung des zu spritzenden Mediums entsprechend für die jeweilige Düsenöffnung angepaßt, kompensiert beziehungsweise vermindert werden kann.

Über die asymmetrische Anordnung des Steges, insbesondere dessen Erstreckung bis zu einem Punkt, der zwischen den beiden Düsenöffnung liegt, wird der unterschiedliche Abstand der Düsenöffnungen vom Grund der Zuführöffnung berücksichtigt.

Weitere vorteilhafte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: eine schematische Draufsicht auf eine Düsenanordnung;
- Figur 2: einen schematischen Querschnitt durch die Düsenanordnung und
- Figur 3: einen schematischen Längsschnitt durch die Düsenanordnung.

### Beschreibung des Ausführungsbeispiels

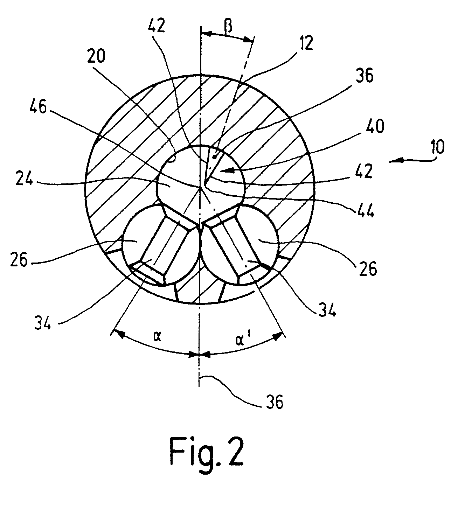

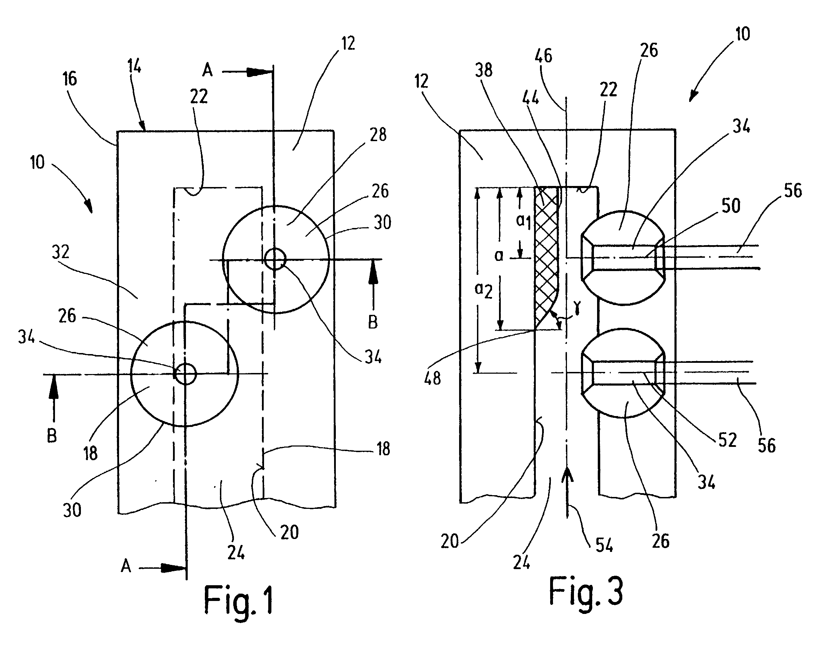

In Figur 1 ist eine Düsenanordnung 10 gezeigt, die beispielsweise Bestandteil einer Scheibenwischanlage für Heckscheiben von Kraftfahrzeugen ist. Die Düsenanordnung 10 weist einen Düsenkörper 12 auf, der als Hohlzylinder 14 ausgebildet ist. Der Hohlzylinder 14 ist an seinem einen Ende 16 geschlossen, so daß ein zylindrischer Innenraum 18 als Sacköffnung ausgebildet ist. Der Innenraum 18 wird von einer Wandung 20 und einem Grund 22 begrenzt. Der Innenraum 18 bildet eine Zuführöffnung 24 für ein mittels Düsen 26 zu spritzendes Medium, insbesondere Scheibenwischwasser, aus. Die Düsen 26 sind als sogenannte Kugeldüsen ausgebildet, das heißt, ein kugelförmiger Grundkörper 28 der Düse 26 ist in entsprechenden kugelförmigen Ausnehmungen 30 eines Mantels 32 des Düsenkörpers 12 angeordnet. Hierdurch wird es möglich, die Düsen 26 in bekannter Weise zu verstellen, so daß den Grundkörper 28 der Düsen 26 durchdringende Düsenöffnungen 34 in ihrer Ausrichtung veränderbar sind. Die Düsenöffnungen 34 münden in der Zuführöffnung 24.

In Figur 2 ist ein Querschnitt durch die Düsenanordnung 10 entlang der Linie B-B gemäß Figur 1 gezeigt. Gleiche Teile wie in Figur 1 sind mit gleichen Bezugszeichen versehen und nicht nochmals erläutert. In Figur 2 sind die zur Zuführöffnung 24 axial zueinander beabstandet angeordneten Düsen 26 in eine Betrachtungsebene projiziert. Hierbei wird deutlich, daß die Düsenöffnungen 34 zu einer Radialen 36 der Zuführöffnung 24 unter einem Winkel α beziehungsweise α' verlaufen. Die Düsen 26 sind hierbei in einer angenommenen Ausgangsstellung gezeigt, wobei die Längsachsen der Düsenöffnungen 34 ebenfalls auf Radialen zur Zuführöffnung 24 verlaufen. Durch die Verstellbarkeit der Düsen 26 kann die Ausrichtung der Düsenöffnungen 34 variieren, so daß diese in ihrer Längserstreckung nicht mehr auf den gedachten Radialen verlaufen, jedoch ein gedachter Mittelpunkt der Grundkörper 28 der Düsen 26 während jeder Stellung der Düse 26 auf der gedachten Radialen liegt. Die Winkel α und α' sind zur Radialen 36 spiegelbildlich und besitzen einen gleich großen Winkelwert von beispielsweise 30°.

Innerhalb der Zuführöffnung 24 ist ein als Steg 38 ausgebildeter Strömungskörper 40 angeordnet. Wie die Schnittdarstellung in Figur 2 verdeutlicht, besitzt der Steg 38 sich im wesentlichen radial erstreckende Mantelflächen 42, deren Schnittpunkt 44 beziehungsweise Schnittlinie nicht mit einer Längsachse 46 der Zuführöffnung 24 zusammenfällt. Der Steg 38 ist unter einem Winkel β zu der Radialen 36 angeordnet, der beispielsweise 15° beträgt.

Dadurch, daß die Schnittlinie 44 nicht mit der Längsachse 46 zusammenfällt und durch die Anordnung des Steges unter dem Winkel β zur Radialen 36 wird erreicht, daß der Steg 38 zu den Düsen 26 unsymmetrisch, bezogen auf die Axialebene, angeordnet ist.

In Figur 3 ist ein Längsschnitt der Düsenanordnung 10 gemäß der Linie A-A in Figur 1 gezeigt. Gleiche Teile sind wiederum mit gleichen Bezugszeichen versehen. Die Linie A-A ist so gelegt, daß die Düsen 26 trotz ihres Winkelversatzes zur Radialen 36 in eine Betrachtungsebene projiziert sind. Anhand des Längsschnittes wird deutlich, daß sich der Steg 38 in axialer Richtung der Zuführöffnung 24 vom Grund 22 bis zu einem Punkt 48 erstreckt. Der Punkt 48 befindet sich in einem Abstand a vom Grund 22, der größer ist als ein Abstand a₁ einer Längsachse 50 der hier oberen Düse 26 und kleiner ist als ein Abstand a₂ einer Längsachse 52 der hier unteren Düse 26. Für diese Betrachtung wird idealerweise davon ausgegangen, daß die Düsen 26 so ausgerichtet sind, daß die Längsachsen 50 beziehungsweise 52 der Düsenöffnungen 34 exakt senkrecht zur Längsachse 46 der Zuführöffnung 24 liegen. Durch die Verstellbarkeit der Düsen 26 kann dies - wie bereits erläutert - variieren. Vom Punkt 48 aus gesehen verläuft die Schnittlinie 44 der Mantelflächen 42 des Steges 38 zunächst unter einem Winkel γ, so daß sich für den Steg 38 aus Strömungsrichtung 54 gesehen eine Ausbildung nach Art eines Schiffsbuges ergibt.

Insgesamt wird durch die Anordnung des Steges 38 in der Zuführöffnung 24 erreicht, daß das in Strömungsrichtung 54 unter Druck in die Zuführöffnung 24 einströmende Medium während des Auftreffens auf den Grund 22 der Zuführöffnung 24 nicht zur Ausbildung von aus den Düsenöffnungen 34, hier rein schematisch angedeuteter Spritzstrahlen 56 beeinträchtigender Wirbelbildung, führt. Die Spritzstrahlen 56 können hierbei mit guter Bündelung, das heißt, ohne starke Streuung, aus der Düsenanordnung 10 austreten. Insbesondere durch die asymmetrische Anordnung des Steges 38 sowohl in Bezug auf die axiale und radiale Anordnung der Düsen 26 wird die Wirbelbildung am Grund 22 der Zuführöffnung 24 derart beeinflußt, daß diese keinen Einfluß auf die Bündelung der Spritzstrahlen 56 an beiden Düsen 26 hat.

## Patentansprüche

1. Düsenanordnung, insbesondere für eine Scheibenwischanlage an Kraftfahrzeugen, mit wenigstens einer Düse (26) die in einem Düsenkörper (12) angeordnet ist, wobei eine Düsenöffnung (34) der wenigstens einen Düse (26) mit einer im wesentlichen senkrecht zur Düsenöffnung (34) verlaufenden Zuführöffnung (24) des Düsenkörpers (12) in Verbindung steht, wobei die Zuführöffnung (24) als Sacköffnung ausgebildet ist, und die Düsenöffnung (34) in der Nähe eines Grundes der Sacköffnung verläuft, wobei innerhalb der Zuführöffnung (24) wenigstens ein Strömungskörper (40) zur Beeinflussung eines mit Druck der Zuführöffnung (24) zugeführten Mediums angeordnet ist, wobei der Strömungskörper (40) ein mit der Wandung (20) der Zuführöffnung (24) verbundener, in Axialrichtung der Zuführöffnung (24) verlaufender Steg (38) ist und wobei die Düsenanordnung (10) zwei Düsen (26) aufweist, **dadurch gekennzeichnet, daß** deren Düsenöffnungen (34) zueinander axial beabstandet in der Zuführöffnung (24) münden und die zu einer Radialen (36) der Zuführöffnung (24) jeweils unter einem gleichen, jedoch spiegelbildlichen Winkel (α, α') verlaufen, wobei der Steg (38) asymmetrisch zu den Düsenöffnungen (34) angeordnet ist.

2. Düsenanordnung nach einem der vorhergehenden Ansprüche, **dadurch gekennzeichnet, daß** der Steg (38) mit einer axialen Stirnfläche am Grund (22) der Zuführöffnung (24) anliegt.

3. Düsenanordnung nach einem der vorhergehenden Ansprüche, **dadurch gekennzeichnet, daß** der Steg (38) radial verlaufende Mantelflächen (42) aufweist, wobei eine Schnittlinie (44) der Mantelflächen (42) nicht mit einer Längsachse (46) der Zuführöffnung (24) zusammenfällt.

4. Düsenanordnung nach einem der vorhergehenden Ansprüche, **dadurch gekennzeichnet, daß** eine in Strömungsrichtung (54) verlaufende Stirnfläche des Steges (38) unter einem Winkel (γ) zur Radialebene der Zuführöffnung (24) verläuft.

5. Düsenanordnung nach einem der Ansprüche 1 bis 4, **dadurch gekennzeichnet, daß** der Steg (38) den Düsenöffnungen (34) gegenüberliegend in der Zuführöffnung (24) angeordnet ist und unter einem Winkel (β) zur Radialen (36) sich radial erstreckt.

6. Düsenanordnung nach einem der Ansprüche 1 bis 5, **dadurch gekennzeichnet, daß** der Steg (38) sich axial bis zu einem Punkt (48) erstreckt, dessen Abstand (a) vom Grund (22) größer ist als ein Abstand (a₁) einer Längsachse (50) der Düsenöffnungen (34) einer ersten Düse (26) und kleiner ist als ein Abstand (a₂) einer Längsachse (52) einer Düsenöffnungen (34) einer zweiten Düse (26).

## Claims

1. Nozzle assembly, in particular for a vehicle windscreen wiper system, having at least one nozzle (26) which is arranged in a nozzle body (12), a nozzle opening (34) of the at least one nozzle (26) being connected to a feed opening (24) of the nozzle body (12), which opening runs essentially perpendicular to the nozzle opening (34), the feed opening (24) being designed as a blind opening, and the nozzle opening (34) running in the vicinity of a base of the blind opening, at least one flow body (40) being arranged within the feed opening (24) and being intended for influencing a medium fed under pressure to the feed opening (24), the flow body (40) being a web (38) which is connected to the wall (20) of the feed opening (24) and runs in the axial direction of the feed opening (24) and the nozzle assembly (10) having two nozzles (26), **characterized in that** the nozzle openings (34) thereof open out in the feed opening (24) at an axial distance from each other and run in each case at a same, but mirror-inverted angle (α, α') with respect to a radial (36) of the feed opening (24), the web (38) being arranged asymmetrically with respect to the nozzle openings (34).

2. Nozzle assembly according to Claim 1, **characterized in that** the web (38) bears with an axial end surface against the base (22) of the feed opening (24).

3. Nozzle assembly according to one of the preceding claims, **characterized in that** the web (38) has circumferential surfaces (42) running radially, an intersecting line (44) of the circumferential surfaces (42) not coinciding with a longitudinal axis (46) of the feed opening (24).

4. Nozzle assembly according to one of the preceding claims, **characterized in that** an end surface of the web (38), which surface runs in the flow direction (54), runs at an angle (γ) with respect to the radial plane of the feed opening (24).

5. Nozzle assembly according to one of Claims 1 to 4, **characterized in that** the web (38) is arranged opposite the nozzle openings (34) in the feed opening (24) and extends radially at an angle (β) with respect to the radial (36).

6. Nozzle assembly according to one of Claims 1 to 5, **characterized in that** the web (38) extends axially as far as a point (48), the distance (a) of which from the base (22) is larger than a distance (a₁) of a longitudinal axis (50) of the nozzle openings (34) of a first nozzle (26) and smaller than a distance (a₂) of a longitudinal axis (52) of the nozzle openings (34) of a second nozzle (26).

## Revendications

1. Agencement de buses, en particulier pour une installation d'essuie-glace de véhicules automobiles, comprenant au moins une buse (26) disposée dans un corps de buse (12), un orifice de buse (34) d'au moins une buse (26) étant relié à un orifice d'alimentation (24) du corps de buse (12) s'étendant pour l'essentiel perpendiculairement à l'orifice de buse (34), l'orifice d'alimentation (24) étant formé comme une ouverture de sac, et l'orifice de buse (34) s'étendant au voisinage d'un fond de l'ouverture de sac, au moins un corps d'écoulement (40) servant à influencer un milieu amené sous pression vers l'orifice d'alimentation (24) étant disposé à l'intérieur de l'orifice d'alimentation (24), le corps d'écoulement (40) étant un talon (38) s'étendant dans la direction axiale de l'orifice d'alimentation (24) et relié à la paroi (20) de l'orifice d'alimentation (24), et l'agencement de buses (10) présentant deux buses (26),
**caractérisé en ce que**
les orifices de buse (34) distants axialement les uns des autres débouchent dans l'orifice d'alimentation (24) et s'étendent respectivement sous un angle (α, α') identique mais inversé à la façon d'un miroir par rapport à un point radial (36) de l'orifice d'alimentation (24), le talon (38) étant disposé de manière asymétrique par rapport aux orifices de buse (34).

2. Agencement de buses selon la revendication précédente,
**caractérisé en ce que**
le talon (38) est placé avec une surface frontale axiale au niveau du fond (22) de l'orifice d'alimentation (24).

3. Agencement de buses selon l'une quelconque des revendications précédentes,
**caractérisé en ce que**
le talon (38) présente des surfaces de revêtement (42) s'étendant radialement, la ligne d'intersection (44) des surfaces de revêtement (42) ne coïncidant pas avec un axe longitudinal (46) de l'orifice d'alimentation (24).

4. Agencement de buses selon l'une quelconque des revendications précédentes,
**caractérisé en ce qu'**
une surface frontale du talon (38) disposée dans le sens de l'écoulement (54) s'étend sous un angle (γ) par rapport au plan radial de l'orifice d'alimentation (24).

5. Agencement de buses selon l'une des revendications 1 à 4,
**caractérisé en ce que**
le talon (38) est disposé à l'opposé des orifices de buse (34) dans l'orifice d'alimentation (24) et s'étend radialement sous un angle (β) par rapport au point radial (36).

6. Agencement de buses selon l'une des revendications 1 à 5,
**caractérisé en ce que**
le talon (38) s'étend axialement jusqu'à un point (48) dont la distance (a) par rapport au fond (22) est supérieure à une distance (a₁) d'un axe longitudinal (50) des orifices de buses (34) d'une première buse (26) et inférieure à une distance (a₂) d'un axe longitudinal (52) des orifices de buses (34) d'une seconde buse (26).
